# EUROPÄISCHE PATENTSCHRIFT

(11) **EP 4 334 205 B1**
(45) Veröffentlichungstag und Bekanntmachung des Hinweises auf die Patenterteilung: **14.01.2026**
(21) Anmeldenummer: 22727799.3
(22) Anmeldetag: 03.05.2022
(51) Int. Cl.: B63H 21/17, B63H 23/32, F16C 32/04, F16C 39/06, F16C 17/04

(54) **ANTRIEBSVORRICHTUNG ZUM ANTRIEB EINES WASSERFAHRZEUGES**
DRIVE DEVICE FOR DRIVING A WATERCRAFT
DISPOSITIF DE PROPULSION POUR PROPULSER UN VÉHICULE AQUATIQUE

(30) Priorität: 03.05.2021 DE 102021111401
(43) Veröffentlichungstag der Anmeldung: 13.03.2024
(73) Patentinhaber: Rosenxt Holding AG, 6370 Stans (CH)
(72) Erfinder: FIELERS, Frank, 49808 Lingen (DE)
(74) Vertreter: Wischmeyer, André
(86) Internationale Anmeldenummer: PCT/EP2022/061849
(87) Internationale Veröffentlichungsnummer: WO 2022/233871

(56) Entgegenhaltungen:
- WO-A1-2006/022554
- DE-A1- 102008 006 809
- DE-A1- 102014 005 314
- DE-A1- 102015 212 501
- US-A- 3 614 180

## Beschreibung

Die Erfindung betrifft eine Antriebsvorrichtung zum Antrieb eines Wasserfahrzeuges. Die Antriebsvorrichtung weist einen Stator und einen Rotor auf, der im Betrieb relativ zum Stator um eine Rotationsachse rotiert. Die Rotationsachse ist ortsfest zum Stator angeordnet. Der Rotor ist als Innenläufer ausgebildet. Der Rotor ist zumindest im Betrieb mittels zumindest einer ersten Axiallagereinrichtung in axialer Richtung am Stator abgestützt.

Die DE 10 2008 006 809 A1 betrifft einen Antrieb für ein Wasserfahrzeug, umfassend - eine umlaufende Einheit mit einem Propeller; - einen Elektromotor mit einer koaxialen Anordnung von Rotor und Stator und einem radial gerichteten magnetischen Feld, wobei der Rotor außerhalb des Rumpfs des Wasserfahrzeugs angeordnet ist und in drehstarrer Verbindung mit dem Propeller steht. Ein Luftspalt zwischen Rotor und Stator ist geflutet, wobei zu beiden Seiten des Luftspalts wassergeschmierte Gleichlager angeordnet sind.

Aus der WO 2006/022554 A1**,** die die Merkmale des Oberbegriffs des Anspruchs 1 offenbart, ist eine magnetische Axiallagereinrichtung für einen als Impeller ausgebildeten Wasserantrieb bekannt, die jeweils zwei mit Permanentmagneten versehene Magnetkränze aufweist.

In der DE 10 2015 212 501 A1 ist eine Antrieb für ein Wasserfahrzeug mit einem Propeller und einer Welle offenbart, die mit dem Propeller gekoppelt ist. Dabei ist die Welle insbesondere innerhalb eines Gehäuses gelagert, wobei ein Lager zur Lagerung der Welle ein Magnetlager ist. Neben einem Magnetlager kann zur Lagerung der Welle auch ein mechanisches Lager vorgesehen sein.

Bei bekannten derartigen Antriebsvorrichtungen bildet der Rotor einen Strömungskanal aus, in dem zur Erzeugung eines Vorschubs Wasser in eine zur Rotationsachse parallele oder koaxiale axiale Richtung durch die Rotation des Rotors verdrängt wird. Zur Übertragung der in die axiale Richtung erzeugten Kraft auf den Stator und damit den Benutzer dient die erste Axiallagereinrichtung.

Nachteilig bei bekannten Axiallagereinrichtungen ist deren Verschleiß. Dieser ist insbesondere aufgrund des Durchmessers der Axiallagereinrichtungen, der wegen der Ausbildung des Rotors als Innenläufer den Durchmesser des Strömungskanals übersteigen muss, wesentlich. Daraus folgen zum einen erhebliche Leistungsverluste und zum anderen ein hoher Wartungsaufwand.

Aufgabe der Erfindung ist die Bereitstellung einer gattungsgemäßen, effizienteren und kompakter bauenden Antriebsvorrichtung.

Erfindungsgemäß wird die Aufgabe dadurch gelöst, dass die erste Axiallagereinrichtung zumindest eine am Rotor angeordnete erste Rotormagnetvorrichtung und zumindest eine am Stator angeordnete erste Statormagnetvorrichtung aufweist. Die Rotormagnetvorrichtung ist zur Ausbildung eines ersten Rotormagnetfeldes eingerichtet. Die erste Statormagnetvorrichtung ist zur Ausbildung eines ersten Statormagnetfeldes eingerichtet. Die Axiallagereinrichtung ist zur Ausbildung einer aufgrund des ersten Rotormagnetfeldes und des ersten Statormagnetfeldes zwischen der ersten Rotormagnetvorrichtung und der ersten Statormagnetvorrichtung wirkenden ersten Lagerkraft eingerichtet. Die erste Lagerkraft wirkt zumindest anteilig in die axiale Richtung.

Die Antriebsvorrichtung dient insbesondere zur Verdrängung von Wasser, wozu zumindest der Rotor, insbesondere die gesamte Antriebsvorrichtung unterhalb der Wasseroberfläche zu betreiben ist. Der Rotor weist bevorzugt zumindest eine in den Strömungskanal ragende(n) Schaufel oder Flügel auf oder ist zur Aufnahme zumindest einer/s in den Strömungskanal ragenden Schaufel bzw. Flügels ausgebildet.

Der Rotor ist insbesondere naben- oder wellenlos bzw. als Hohlwelle ausgebildet. Bevorzugt schneidet die Rotationsachse den Rotor nicht, sondern verläuft durch einen vom Rotor gebildeten Hohlraum hindurch. Der Rotor ist erfindungsgemäß als Impeller ausgebildet.

Der Stator umfasst den Teil bzw. die Bauteile der Antriebsvorrichtung, der/die im Betrieb nicht mit dem Rotor rotiert/rotieren. Der Stator umfasst insbesondere einen Controller, ein Gehäuse, Eingabe- und/oder Ausgabemittel zur Kommunikation der Antriebsvorrichtung mit dem Benutzer. Der Stator ist im Betrieb insbesondere ortsfest am anzutreibenden Wasserfahrzeug angeordnet oder vom Wasserfahrzeug umfasst, wobei Wasserfahrzeuge Wassersportgeräte wie Wasserschlitten, Foilboards und Wasserfahrräder umfassen. Vorzugsweise umfasst der Stator einen Motor oder bildet einen Motor aus. Alternativ bilden vorzugsweise der Stator und der Rotor gemeinsam einen Motor, z.B. einen Elektromotor, aus oder umgeben den Motor.

Bevorzugt ist der Rotor zumindest mittels der ersten Axiallagereinrichtung und einer insbesondere separaten ersten Radiallagereinrichtung am Rotor abgestützt. Die Axiallagereinrichtung begrenzt, erschwert oder verhindert eine Beweglichkeit des Rotors relativ zum Stator in die axiale Richtung. Die erste Rotormagnetvorrichtung ist insbesondere ortsfest am Rotor angeordnet oder vom Rotor umfasst. Die erste Statormagnetvorrichtung ist insbesondere ortsfest am Stator angeordnet oder vom Stator umfasst. Die erste Rotormagnetvorrichtung und/oder die erste Statormagnetvorrichtung umfassen/umfasst bevorzugt zumindest einen Magneten. Das erste Rotormagnetfeld der ersten Rotormagnetvorrichtung überlagert im Betrieb das erste Statormagnetfeld der ersten Statormagnetvorrichtung. Aus der Überlagerung der Magnetfelder resultiert die erste Lagerkraft. Durch die erste Lagerkraft werden die erste Rotormagnetvorrichtung und die erste Statormagnetvorrichtung vorzugsweise voneinander angezogen oder abgestoßen.

Der Rotor lässt sich insbesondere durch die erste Lagerkraft in die axiale Richtung in eine Ausgangsstellung verlagern. Insbesondere ist der Rotor relativ zum Stator aus der Ausgangsstellung in die axiale Richtung und entgegen der ersten Lagerkraft zumindest geringfügig verschieblich. Nach einer entsprechenden Verschiebung führt die erste Lagerkraft, die Abwesenheit weiterer in die Axialrichtung wirken der Kräfte vorausgesetzt, zu einer Rückverlagerung des Rotors in die Ausgangsstellung.

Die erfindungsgemäße Ausbildung der Antriebsvorrichtung vermindert oder verhindert Verschleiß und Reibungsverluste durch die Axiallagereinrichtung, da der Rotor und der Stator bzw. die erste Rotormagnetvorrichtung und die erste Statormagnetvorrichtung in axialer Richtung im Betrieb zumindest überwiegend keinen Kontakt haben. Dadurch lässt sich die Effizienz der Antriebsvorrichtung steigern und ein gewünschter Vorschub bereits durch einen kleiner bauenden Motor erreichen.

Die Antriebsvorrichtung ist insbesondere frei von einer den Rotor in axialer Richtung am Stator abstützenden Lagereinrichtung, die von einem anderen Typ als die erste Axiallagereinrichtung ist. Bevorzugt ist die Antriebsvorrichtung frei von axial wirkenden, mechanischen und/oder hydrodynamischen Lagern, durch die sich der Rotor in axialer Richtung am Stator abstützt. Besonders bevorzugt weist die Antriebsvorrichtung keinen axial wirkendes Kugel-, Kegel- oder Gleitlager auf. Hierdurch lassen sich die vorgenannten Vorteile ausweiten.

Die erste Axiallagereinrichtung ist bevorzugt derart zur Ausbildung der ersten Lagerkraft eingerichtet, dass die erste Rotormagnetvorrichtung zumindest im Betrieb durch die erste Lagerkraft von der ersten Statormagnetvorrichtung abgestoßen wird. Das bedeutet insbesondere, dass die erste Statormagnetvorrichtung und die erste Rotormagnetvorrichtung zumindest im Betrieb zumindest anteilig gegensätzlich zueinander, magnetisiert sind. Insbesondere sind gleichnamige Pole (Nordpol oder Südpol) der ersten Statormagnetvorrichtung und der ersten Rotormagnetvorrichtung einander im Betrieb zumindest anteilig zugewandt oder haben eine größere Nähe zueinander als sich unterscheidende Pole. Dadurch, dass die erste Lagerkraft eine die erste Rotormagnetvorrichtung von der ersten Statormagnetvorrichtung abstoßende Lagerkraft ist und die Lagerkraft mit sich verringerndem Abstand zwischen der ersten Rotormagnetvorrichtung und der ersten Statormagnetvorrichtung überproportional zunimmt, ist eine besonders vorteilhafte Lagercharakteristik erreicht.

Vorzugsweise sind/ist die erste Rotormagnetvorrichtung und/oder die erste Statormagnetvorrichtung zumindest im Betrieb zumindest anteilig, insbesondere ausschließlich, in die axialer Richtung magnetisiert. Das bedeutet, dass eine gedachte Gerade durch den Nordpol und den Südpol der jeweiligen Magnetvorrichtung zu einer zur Rotationssachse rechtwinklig angeordneten Ebene angewinkelt ist oder parallel zur Rotationssachse verläuft. Durch diese Form der Magnetisierung lässt sich der in die axiale Richtung wirkende Anteil der ersten Lagerkraft besonders effizient erzeugen.

Die erste Rotormagnetvorrichtung und/oder die erste Statormagnetvorrichtung sind/ist bevorzugt von zumindest einem Permanentmagneten ausgebildet. Der zumindest eine Permanentmagnet ist insbesondere am (restlichen Teil vom) Rotor bzw. Stator angeklebt. Dadurch ist die erste Lagerkraft besonders einfach und ohne gesonderten Energiebedarf zu erreichen. Besonders bevorzugt umfassen/umfasst die erste Rotormagnetvorrichtung und/oder die erste Statormagnetvorrichtung zumindest zwei, insbesondere genau zwei, Permanentmagneten und/oder keinen anderen Magneten wie einen Elektromagneten. Vorzugsweise umfassen die erste Rotormagnetvorrichtung und die erste Statormagnetvorrichtung eine Gleichzahl an Permanentmagneten. Insbesondere sind die erste Statormagnetvorrichtung und die erste Rotormagnetvorrichtung gleichartig bzw. spiegelsymmetrisch bezogen auf eine zur Rotationssachse rechtwinklige Spiegelebene ausgebildet.

Alternativ oder zusätzlich zum zumindest einen Permanentmagneten umfassen/umfasst die erste Rotormagnetvorrichtung und/oder die erste Statormagnetvorrichtung zumindest einen Elektromagneten. Der Vorteil des Elektromagneten gegenüber dem Permanentmagneten ist vorliegend die mit dem Elektromagneten auch bei konstantem Abstand der ersten Rotormagnetvorrichtung von der ersten Statormagnetvorrichtung einstellbare erste Lagerkraft.

Vorzugsweise sind die erste Rotormagnetvorrichtung und die erste Statormagnetvorrichtung zumindest im Betrieb zumindest im Wesentlichen gleich weit von der Rotationsachse beanstandet. Bevorzugt sind/ist die erste Statormagnetvorrichtung und/oder die erste Rotormagnetvorrichtung bzw. ihr jeweiliger zumindest einer Permanentmagnet umlaufend, insbesondere rotationssymmetrisch, um die Rotationssachse ausgebildet. Besonders bevorzugt sind/ist die erste Statormagnetvorrichtung und/oder die erste Rotormagnetvorrichtung bzw. ihr jeweiliger zumindest einer Permanentmagnet ringförmig ausgebildet. Durch diese Anordnung lässt sich die erste Lagerkraft besonders homogen und platzsparend entlang des gesamten Umfangs des Rotors bzw. Stator erzeugen. In einer alternativen Ausführungsform umfassenden/umfasst die erste Statormagnetvorrichtung und/oder die erste Rotormagnetvorrichtung eine Mehrzahl von entlang eines Umfangs verteilten Magneten bzw. Permanentmagneten, die insbesondere zusammen eine Ringform ausbilden.

Vorzugsweise weist die erste Axiallagereinrichtung ein Anschlagelement auf, mit dem eine axiale Verschieblichkeit des Rotors relativ zum Stator und entgegen der ersten Lagerkraft derart begrenzt ist, dass ein Kontakt zwischen der ersten Rotormagnetvorrichtung und der ersten Statormagnetvorrichtung verhindert ist. Insbesondere ist ein Kontakt der jeweils umfassten Magnete verhindert. Das Anschlagelement verhindert im Falle von außergewöhnlichen axialen Belastungen des Rotors eine Beschädigung der Magnete.

In einer vorteilhaften Ausgestaltung der Erfindung steht ein erster Axialzwischenraum zwischen der ersten Statormagnetvorrichtung und der ersten Rotormagnetvorrichtung in Fluidkommunikation mit einem den Stator zumindest teilweise umgebenden Umgebungsraum. Das bedeutet, dass im Betrieb Wasser aus der Umgebung der Antriebsvorrichtung in den ersten Axialzwischenraum gelangt. Dies ist insofern vorteilhaft, als dadurch auf einfache Weise eine Kühlung der ersten Statormagnetvorrichtung und der ersten Rotormagnetvorrichtung erreicht wird und eine Dämpfung einer Relativbewegung des Rotors relativ zum Stator erzeugt wird. Insbesondere ist der Axialzwischenraum in zwei unterschiedliche, sich insbesondere gegenüberliegende Richtungen zur Umgebungsraum hin geöffnet.

Vorzugsweise weist die Antriebsvorrichtung zumindest eine zweite Axiallagereinrichtung auf, mittels derer der Rotor zumindest im Betrieb in axialer Richtung am Stator abgestützt ist. Die zweite Axiallagereinrichtung weist zumindest eine am Rotor angeordnete und zur Ausbildung eines zweiten Rotormagnetfeldes eingerichtete, zweite Rotormagnetvorrichtung und zumindest eine am Stator angeordnete und zur Ausbildung eines zweiten Statormagnetfeldes eingerichtete, zweite Statormagnetvorrichtung auf. Die zweite Axiallagereinrichtung ist zur Ausbildung einer aufgrund des zweiten Rotormagnetfeldes und des zweiten Statormagnetfeldes zwischen der zweiten Rotormagnetvorrichtung und der zweiten Statormagnetvorrichtung wirkenden und zumindest anteilig in die axiale Richtung wirkenden und zunächst anteilig der ersten Lagerkraft entgegen wirkenden zweiten Lagerkraft eingerichtet. Die zweite Axiallagereinrichtung weist bevorzugt die vor- oder nachstehend betreffend die erste Axiallagereinrichtung beschriebenen Merkmale vollständig oder teilweise auf.

**In** einer bevorzugten Ausgestaltung sind die erste Statormagnetvorrichtung und die zweite Statormagnetvorrichtung bzw. die erste Rotormagnetvorrichtung und die zweite Rotormagnetvorrichtung einteilig und/oder zumindest teilweise, insbesondere vollständig, von dem- oder denselben Magneten ausgebildet. Die jeweilige Magnetvorrichtung ist dabei besonders bevorzugt in axialer Richtung zwischen der ersten Rotormagnetvorrichtung und der zweiten Rotormagnetvorrichtung angeordnet, deren Rotormagnetfelder dann ein gemeinsames Statormagnetfeld überlagern, bzw. zwischen der ersten Statormagnetvorrichtung und der zweiten Statormagnetvorrichtung angeordnet, deren Rotormagnetfelder dann ein gemeinsames Rotormagnetfeld überlagern.

Die erste Axiallagereinrichtung und die zweite Axiallagereinrichtung sind insbesondere derart angeordnet, dass ein Elektromotor zumindest in axialer Richtung zumindest teilweise zwischen der ersten Axiallagereinrichtung und der zweiten Axiallagereinrichtung angeordnet ist. Bevorzugt weist dabei der Rotor zumindest einen Anker und der Stator zumindest eine Spule auf oder ist zumindest ein Anker am Rotor angeordnet und zumindest eine Spule am Stator angeordnet, wobei der Anker und die Spule den Elektromotor mit ausbilden. Der Anker und/oder die Spule haben/hat insbesondere einen geringeren Abstand von der Rotationsachse als die Rotormagnetvorrichtungen und/oder die Statormagnetvorrichtungen. Vorzugsweise ist die erste Axiallagereinrichtung bezogen auf die axiale Richtung einenends des Rotors und die zweite Axiallagereinrichtung anderenends des Rotors angeordnet. Durch diese Anordnung der Axiallagereinrichtungen bzw. des Elektromotors wird eine besonders kompakte Ausbildung der Antriebsvorrichtung erreicht.

Vorzugsweise übersteigt die von der ersten Axiallagereinrichtung bei einem Referenzabstand zwischen der ersten Rotormagnetvorrichtung und der ersten Statormagnetvorrichtung ausgebildete oder maximal auszubildende erste Lagerkraft die von der zweiten Axiallagereinrichtung bei dem Referenzabstand zwischen der zweiten Rotormagnetvorrichtung und der zweiten Statormagnetvorrichtung ausgebildete oder maximal auszubildende zweite Lagerkraft. Das bedeutet, dass sich die die Lagerkräfte erzeugenden Magnetfelder unterscheiden bzw. die erste Axiallagereinrichtung sich von der zweiten Axiallagereinrichtung unterscheidet. Sofern die Magnetvorrichtungen an Magneten ausschließlich Permanentmagneten aufweisen, handelt es sich um die ausgebildete erste Lagerkraft bzw. die ausgebildete zweite Lagerkraft, wohingegen es sich um die maximal auszubildende erste Lagerkraft bzw. die maximal auszubildende zweite Lagerkraft handelt, sofern die betreffenden Magnetvorrichtungen zumindest einen Elektromagneten aufweist. Durch diese Ausbildung der Antriebsvorrichtung nimmt der Rotor bei Ausbleiben von außerhalb aufgebrachter, axialer Kräfte eine Ausgangsstellung ein, in der die erste Rotormagnetvorrichtung von der ersten Statormagnetvorrichtung einen anderen Abstand hat als die zweite Rotormagnetvorrichtung von der zweiten Statormagnetvorrichtung. Dabei können die Axiallagereinrichtungen in und entgegen der Vorschubrichtung unterschiedlich große axiale Kräfte aufnehmen bzw. es existiert eine asymmetrische Lagerkraftverteilung. Hierdurch ist die Antriebsvorrichtung auf solche Wasserfahrzeuge zugeschnitten, die nur eine einzige oder zumindest eine bevorzugte Fahrtrichtung haben, der eine größere Lagerkraft entgegenzustellen ist, und lässt sich weiterer Bauraum einsparen. Bevorzugt ist die erste Axiallagereinrichtung in die Richtung des Vorschubs des Wasserfahrzeuges vor der zweiten Axiallagereinrichtung angeordnet.

Vorzugsweise sind/ist die zweite Rotormagnetvorrichtung und/oder die zweite Statormagnetvorrichtung von genau einem Permanentmagneten bzw. genau einem von zumindest einem Permanentmagneten gebildeten Magnetring ausgebildet. Insbesondere sind/ist dabei die erste Rotormagnetvorrichtung und/oder die erste Statormagnetvorrichtung von zwei Permanentmagneten oder zwei von Permanentmagneten gebildeten Magnetringen ausgebildet. Die Permanentmagnete sind dabei bevorzugt gleich ausgebildet. Hierdurch lässt sich der vorbeschriebene Vorteil der asymmetrischen Lagerkraftverteilung durch einheitliche Bauteile erreichen.

Erfindungsgemäß weist die Antriebsvorrichtung zumindest eine erste hydrodynamische Radiallagereinrichtung auf. Mittels der ersten Radiallagereinrichtung ist der Rotor im Betrieb in radialer Richtung am Stator abgestützt. Die erste Radiallagereinrichtung weist vorzugsweise zumindest einen am Stator angeordnetes, erstes Statorradiallagerelement und zumindest einen am Rotor angeordnetes, erstes Rotorradiallagerelement auf. Zwischen dem ersten Statorradiallagerelement und dem ersten Rotorradiallagerelement ist zumindest im Betrieb ein erster Radialzwischenraum ausgebildet. Im ersten Radialzwischenraum bildet sich im Betrieb eine Fluidschicht, die insbesondere ab einer Mindestdrehzahl eine entlang des Umfangs der ersten Radiallagereinrichtung einheitliche in die radialer Richtung gemessene Höhe aufweist. Das erste Statorradiallagerelement und das erste Rotorradiallagerelement bilden somit ein hydrodynamisches Radiallager bzw. Gleitlager. Dieses bildet zusammen mit der bzw. den Axiallagereinrichtung(en) eine besonders platzsparende und zuverlässige Lagerung des Rotors. Zugunsten einer optimalen Tragfähigkeit der ersten Radiallagereinrichtung sind das erste Statorradiallagerelement und das erste Rotorradiallagerelement insbesondere aus einer Keramik, bevorzugt aus Zirkoniumoxid oder Siliziumkarbid ausgebildet.

Der erste Radialzwischenraum steht bevorzugt in Fluidkommunikation mit dem den Stator umgebenden Umgebungsraum. Besonders bevorzugt steht der erste Radialzwischenraum in Fluidkommunikation mit dem ersten Axialzwischenraum. Das führt im Betrieb dazu, dass der erste Radialzwischenraum im Betrieb mit Wasser gefüllt ist. Dieses gewährleistet auch hier eine hinreichende Kühlung. Außerdem erübrigt die Verwendung von Wasser anstelle von typischen Schmierstoffen die Notwendigkeit einer Abdichtung der ersten Radiallagereinrichtung gegenüber dem Umgebungsraum und spart dadurch weiteren Bauraum ein.

Der erste Radialzwischenraum hat zumindest bei einer zentralen Anordnung des Rotors bezogen auf die Rotationssachse eine radiale Erstreckung von zumindest 0,3 mm, bevorzugt von zumindest 0,5 mm und/oder von höchstens 1,2 mm, bevorzugt von höchstens 0,9 mm. Dabei erstreckt sich der erste Radialzwischenraum bevorzugt rotationssymmetrisch. Besonders bevorzugt erstrecken/erstreckt sich auch das erste Rotorradiallagerelement und/oder das erste Statorradiallagerelement rotationssymmetrisch. Der erste Radialzwischenraum hat bevorzugt einen Innenradius von zumindest 20 mm, besonders bevorzugt von zumindest 30 mm. Der Innenradius ist bevorzugt nur geringfügig größer als einen Außenradius des vom Rotor ausgebildeten Strömungskanals. Durch diese Ausbildung des ersten Radialzwischenraumes hat die Antriebsvorrichtung eine besonders schlanke Bauform und ist die erste Radiallagereinrichtung zumindest ab einer Drehzahl des Rotors von 3.000 Umdrehungen pro Minute tragend.

Die erste Radiallagereinrichtung ist zumindest teilweise zwischen der ersten oder der zweiten Axiallagereinrichtung und der Rotationssachse angeordnet. Insbesondere schneidet ein zur Rotationssachse rechtwinkliger und die erste Radiallagereinrichtung oder den ersten Radialzwischenraum schneidender Querschnitt die erste oder zweite Axiallagereinrichtung oder deren Axialzwischenraum. Hierdurch lässt sich der Rotor bzw. der Strömungskanal besonders kurz ausbilden und hat der durch die Zwischenräume fließende Wasserstrom nur einen kurzen Weg zurückzulegen, wodurch nur geringe Verluste erzeugt werden.

Vorzugsweise weist die Antriebsvorrichtung zumindest eine zweite hydrodynamische Radiallagereinrichtung auf, mittels derer der Rotor im Betrieb in radialer Richtung am Stator abgestützt ist und die ein am Stator angeordnetes, zweites Statorradiallagerelement und ein am Rotor angeordnetes, zweites Rotorradiallagerelement aufweist. Zwischen dem zweiten Statorradiallagerelement und dem zweiten Rotorradiallagerelement ist zumindest im Betrieb ein zweiter Radialzwischenraum ausgebildet, der insbesondere in Fluidkommunikation mit dem Umgebungsraum, bevorzugt mittels eines zwischen dem Rotor und dem Stator ausgebildeten Fluidkanals in Fluidkommunikation mit dem ersten Radialzwischenraum, steht. Einen/der Elektromotor ist dabei insbesondere zumindest in axialer Richtung zumindest teilweise zwischen der ersten Radiallagereinrichtung und der zweiten Radiallagereinrichtung angeordnet. Die zweite Radiallagereinrichtung weist bevorzugt die vor- oder nachstehend betreffend die erste Radiallagereinrichtung beschriebenen Merkmale vollständig oder teilweise auf. Die erste Radiallagereinrichtung ist bevorzugt baugleich mit der zweiten Radiallagereinrichtung. Durch diese Ausbildung, insbesondere die Ausbildung des Fluidkanals durch eine Mehrzahl bzw. sämtliche der genannten Zwischenräume und bevorzugt zwischen der Spule und den Anker des Elektromotors hindurch, ist eine besonders effiziente unzuverlässige Lagerung erreicht.

Weitere Einzelheiten und Vorteile der Erfindung sind den nachfolgend beschriebenen, schematisch dargestellten Ausführungsbeispielen zu entnehmen; es zeigen:
- Fig. 1: ein erstes Ausführungsbeispiel einer erfindungsgemäßen Antriebsvorrichtung in einem Längsschnitt,
- Fig. 2: ein zweites Ausführungsbeispiel der erfindungsgemäßen Antriebsvorrichtung in einer Seitenansicht,
- Fig. 3: das zweite Ausführungsbeispiel der erfindungsgemäßen Antriebsvorrichtung in einem Längsschnitt,
- Fig. 4: das zweite Ausführungsbeispiel der erfindungsgemäßen Antriebsvorrichtung in einem Querschnitt,
- Fig. 5: einen Teil des zweiten Ausführungsbeispiels der erfindungsgemäßen Antriebsvorrichtung in einer vergrößerten Detaildarstellung,
- Fig. 6: ein drittes Ausführungsbeispiel der erfindungsgemäßen Antriebsvorrichtung in einer Frontansicht,
- Fig. 7: ein Wasserfahrzeug mit einer erfindungsgemäßen Antriebsvorrichtung in einer perspektivischen Darstellung.

Die nachfolgend erläuterten Merkmale der erfindungsgemäßen Ausführungsbeispiele können auch einzeln oder in anderen Kombinationen als dargestellt oder beschrieben Gegenstand der Erfindung sein, stets aber zumindest in Kombination mit den Merkmalen des Anspruchs 1. Sofern sinnvoll, sind funktional gleichwirkende Teile mit identischen Bezugsziffern versehen.

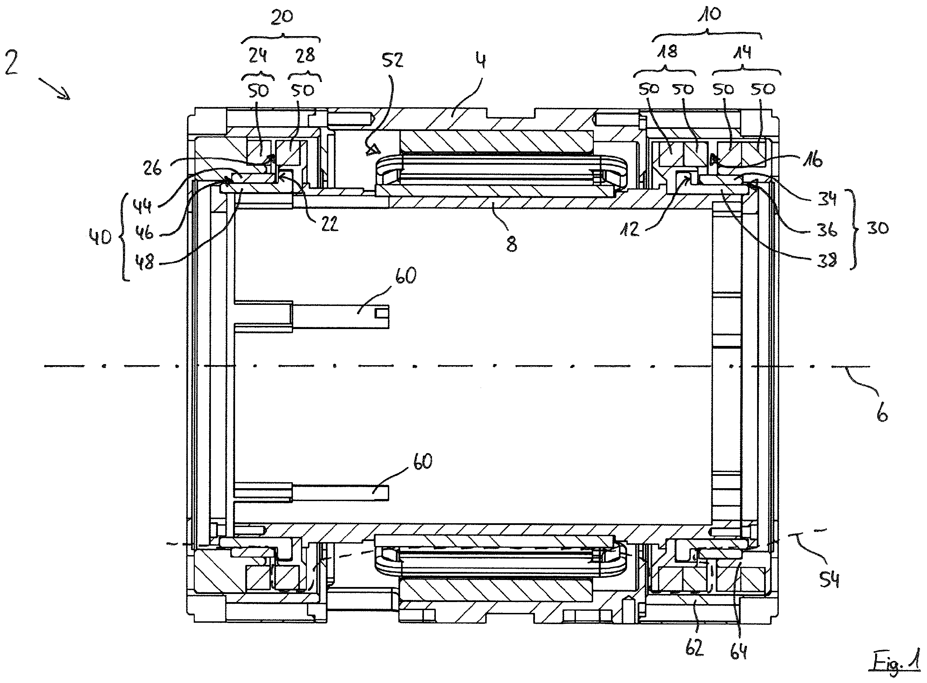

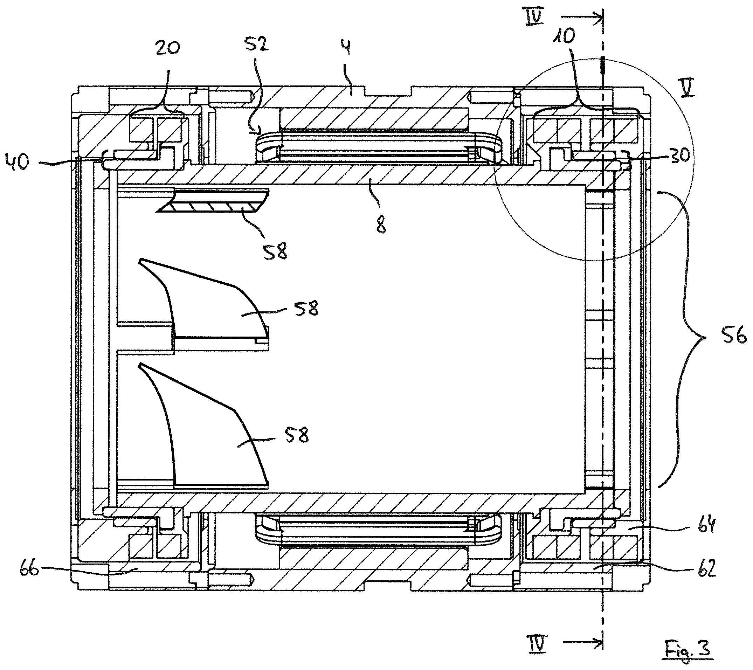

Die Fig. zeigen unterschiedliche Ausführungsbeispiele der erfindungsgemäßen Antriebsvorrichtung 2 zum Antrieb eines Wasserfahrzeuges 70. Jede der Ausführungsbeispiele weist einen Stator 4 und einen im Betrieb relativ zum Stator 4 um eine Rotationsachse 6 rotierenden Rotor 8 auf (sh. Fig. 1). Die Rotationsachse 6 ist zum Stator 4 ortsfest. Der Rotor 8 ist als Innenläufer ausgebildet. Das bedeutet, dass der Rotor 8 als Hohlwelle bzw. wellen-/nabenlos ausgebildet ist. Der Rotor 8 bildet einen sich länglich in Richtung der Rotationsachse 6 erstreckenden Strömungskanal 56 aus. Dabei weist der Rotor 8 im ersten Ausführungsbeispiel Ausnehmungen 60 zur Befestigung von Schaufeln bzw. Flügeln zur Verdrängung von Wasser innerhalb des Strömungskanals 56 auf (sh. Fig. 1). Im zweiten Ausführungsbeispiel umfasst der Rotor 8 derartige Schaufeln bzw. Flügel 58 (sh. Fig. 3).

Der Rotor 8 ist mittels einer ersten Axiallagereinrichtung 10 und einer zweiten Axiallagereinrichtung 20 in axialer Richtung am Stator 4 abgestützt. In radialer Richtung ist der Rotor 8 mittels einer ersten hydrodynamischen Radiallagereinrichtung 30 und einer zweiten hydrodynamischen Radiallagereinrichtung 40 am Stator 4 abgestützt. Zwischen der ersten Axiallagereinrichtung 10 und der zweiten Axiallagereinrichtung 20 ist ein Elektromotor 52 zur Erzeugung einer Rotation des Rotors 8 relativ zum Stator 4 angeordnet.

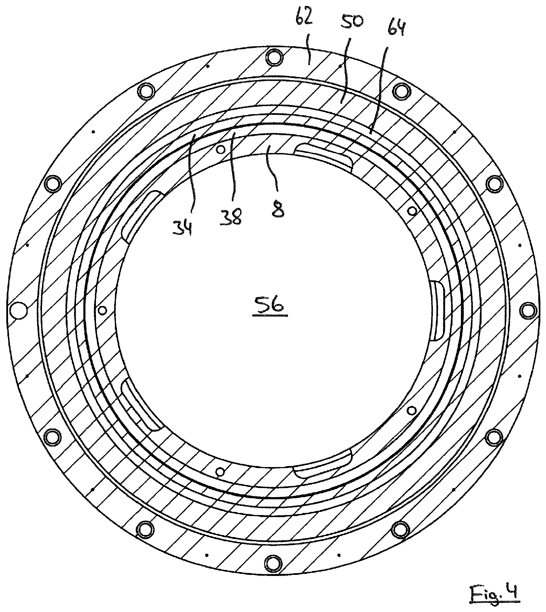

Die erste Axiallagereinrichtung 10 weist eine am Rotor 8 angeordnete und zur Ausbildung eines ersten Rotormagnetfeldes eingerichtete erste Rotormagnetvorrichtung 18 auf. Außerdem weist die erste Axiallagereinrichtung 10 eine am Stator 6 angeordnete und zur Ausbildung eines ersten Statormagnetfeldes eingerichtete erste Statormagnetvorrichtung 14 auf. Die erste Rotormagnetvorrichtung 18 und die erste Statormagnetvorrichtung 14 umfassen je zwei ringförmig (sh. insbesondere Fig. 4, Querschnitt entlang der in Fig. 3 gekennzeichneten Schnittebene IV) um die Rotationsachse 6 umlaufende Permanentmagneten 50. Die erste Axiallagereinrichtung 10 ist zur Ausbildung einer aufgrund des ersten Rotormagnetfeldes und des ersten Statormagnetfeldes zwischen der ersten Rotormagnetvorrichtung 18 und der ersten Statormagnetvorrichtung 14 und zumindest anteilig in die axiale Richtung wirkenden ersten Lagerkraft eingerichtet.

Die zweite Axiallagereinrichtung 20 weist analog zur ersten Axiallagereinrichtung 10 eine am Rotor 8 angeordnete und zur Ausbildung eines zweiten Rotormagentfeldes eingerichtete zweite Rotormagnetvorrichtung 28 und eine am Stator 6 angeordnete und zur Ausbildung eines zweiten Statormagnetfeldes eingerichtete zweite Statormagnetvorrichtung 24 auf. Im Gegensatz zur ersten Rotormagnetvorrichtung 18 und zur ersten Statormagnetvorrichtung 14 umfassen die zweite Rotormagnetvorrichtung 28 und die zweite Statormagnetvorrichtung 24 jedoch jeweils nur einen ringförmig um die Rotationsachse 6 umlaufenden Permanentmagneten 50. Die zweite Axiallagereinrichtung 20 ist ebenso wie die erste Axiallagereinrichtung 10 zur Ausbildung einer aufgrund des zweiten Rotormagnetfeldes und des zweiten Statormagnetfeldes zwischen der zweiten Rotormagnetvorrichtung 28 und der zweiten Statormagnetvorrichtung 24 und zumindest anteilig in die axiale Richtung wirkenden zweiten Lagerkraft eingerichtet, wobei die zweite Lagerkraft der ersten Lagerkraft entgegengerichtet ist.

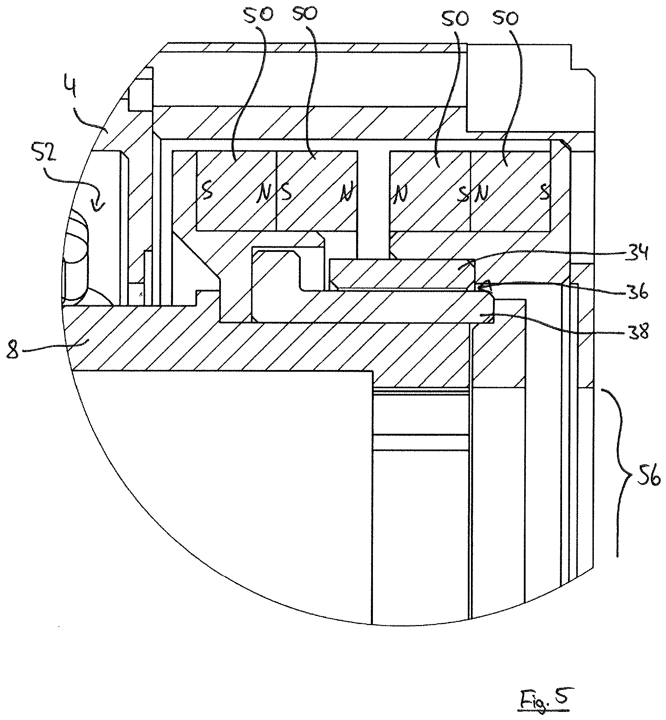

Sowohl die erste Axiallagereinrichtung 10 als auch die zweite Axiallagereinrichtung 20 ist derart zur Ausbildung einer ersten bzw. zweiten Lagerkraft eingerichtet, dass die erste Rotormagnetvorrichtung 18 durch die erste Lagerkaft von der ersten Statormagnetvorrichtung 14 bzw. die zweite Rotormagnetvorrichtung 28 durch die zweite Lagerkraft von der zweiten Statormagnetvorrichtung 24 abgestoßen wird. Die genannten Permanentmagneten 50 sind dazu ausschließlich in die axiale Richtung magnetisiert. Fig. 5 ist eine Detaildarstellung des in Fig. 3 umkreisten und mit V bezeichneten Teils und zeigt, dass sich die unterschiedlichen Magnetvorrichtungen 14, 18, 24, 28 derselben Axiallagereinrichtung 10, 20 einander entgegengesetzt und in axiale Richtung magnetisierte Permanentmagneten 50 aufweisen. Im Einzelnen ist der Nordpol N der ersten Rotormagnetvorrichtung 18 dem Nordpol N der ersten Statormagnetvorrichtung 14 zugewandt, wobei die Südpole S voneinander abgewandt sind. Die Permanentmagneten 50 der Axiallagereinrichtungen 10, 20 sind dabei einheitlich ausgebildet.

Da die zweite Axiallagereinrichtung 20 nur zwei Permanentmagneten 50 und die erste Axiallagereinrichtung 10 vier Permanentmagneten 50 aufweist, ist die erste Axiallagereinrichtung 10 zur Ausbildung einer ersten Lagerkraft ausgebildet, die die zweite Lagerkraft der zweiten Axiallagereinrichtung 20 übersteigt. Die erste Axiallagereinrichtung 10 erzeugt stärkere statische Magnetfelder als die zweite Axiallagereinrichtung 20. Das führt dazu, dass ein zwischen der ersten Rotormagnetvorrichtung 18 und der ersten Statormagnetvorrichtung 14 gegebener erster Axialzwischenraum 16 in einer Ausgangsstellung der Antriebsvorrichtung 2, in der sie in den Figuren dargestellt ist und in der auf den Rotor neben den Lagerkräften keine weiteren axialen Kräfte wirken, eine größere axiale Erstreckung hat als ein zwischen der zweiten Rotormagnetvorrichtung 28 und der zweiten Statormagnetvorrichtung 24 gegebener zweiter Axialzwischenraum 26. In der gezeigten Ausgangstellung befindet sich der in axialer Richtung relativ zum Stator 4 geringfügig verschiebliche Rotor 8 in einer Gleichgewichtsstellung, in der sich die erste Lagerkraft und die zweite Lagerkraft aufheben. Würde die axiale Erstreckung des ersten Axialzwischenraumes 16 mit der axialen Erstreckung des zweiten Axialzwischenraumes 26 übereinstimmen, würde die erste Lagerkraft die zweite Lagerkraft übersteigen.

Sowohl die erste Axiallagereinrichtung 10 als auch die zweite Axiallagereinrichtung 20 weist ein Anschlagelement 12 bzw. 22 auf. Damit wird eine axiale Verschieblichkeit des Rotors 8 relativ zum Stator 4 und entgegen der ersten bzw. zweiten Lagerkraft derart begrenzt, dass ein Kontakt zwischen der ersten Rotormagnetvorrichtung 18 und der ersten Statormagnetvorrichtung 14 bzw. der zweiten Rotormagnetvorrichtung 28 und der zweiten Statormagnetvorrichtung 24 verhindert wird. Das Anschlagelement 12 bzw. 22 wird ausgebildet durch ein erstes Rotorradiallagerelement 38 bzw. zweites Rotorradiallagerelement 48, das zusammen mit einem ersten Statorradiallagerelement 34 bzw. einem zweiten Statorradiallagerelement 44 eine erste hydrodynamische Radiallagereinrichtung 30 bzw. eine zweite hydrodynamische Radiallagereinrichtung 40 ausbildet. Durch die Radiallagereinrichtungen 30, 40 wird der Rotor 8 im Betrieb in radialer Richtung am Stator 4 abgestützt. Die Statorradiallagerelemente 34, 44 sind am Stator 4 angeordnet, die Rotorradiallagerelemente 38, 48 sind am Rotor 8 angeordnet.

Zwischen den Radiallagerelementen 34, 38, 44, 48 einer Radiallagereinrichtung 30, 40 ist ein Radialzwischenraum 36, 46 angeordnet (sh. insbesondere Fig. 5). Die Radialzwischenräume 36, 46 dienen im Betrieb zum Aufbau eines Schmierfilms, wobei Wasser als Schmiermittel genutzt wird. Die Radialzwischenräume 36, 46 haben eine radiale Erstreckung im Bereich von 0,5 mm bis 0,9 mm. Die Radialzwischenräume 36, 46 und die Axialzwischenräume 16, 26 stehen jeweils in Fluidkommunikation mit einem den Stator 4 umgebenden Umgebungsraum. Im Einzelnen bilden Sie einen sich im Wesentlichen parallel zum Strömungskanal 56 erstreckenden Fluidkanal 54, der sich auch zwischen Spulen und Permanentmagneten des Elektromotors 52 hindurch erstreckt und dessen Verlauf in Fig. 1 angedeutet ist.

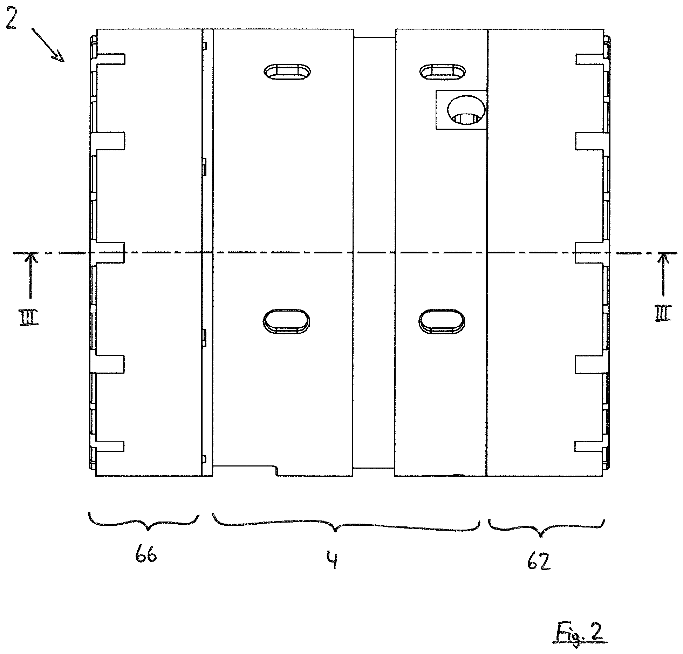

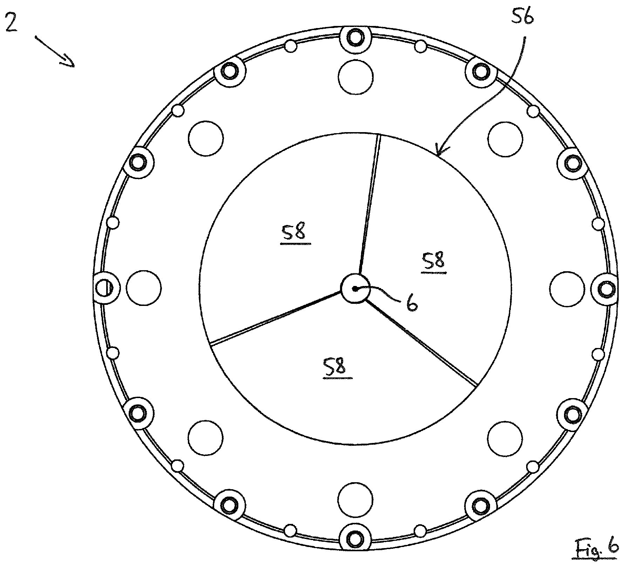

Fig. 3 ist eine Schnittdarstellung entlang der in Fig. 2 gezeigten Schnittlinie **III.** Fig. 2 ist eine Seitenansicht und zeigt außer dem Stator 4 damit verschraubte Lagerdeckel 62, 66, die an Halteelemente 64 angrenzen. Fig. 6 ist eine Frontansicht eines abweichenden Ausführungsbeispiels der Antriebsvorrichtung 2, die von den in Fig. 3 dargestellten Schaufeln bzw. Flügeln 58 abweichende Schaufeln bzw. Flügel 58 umfasst.

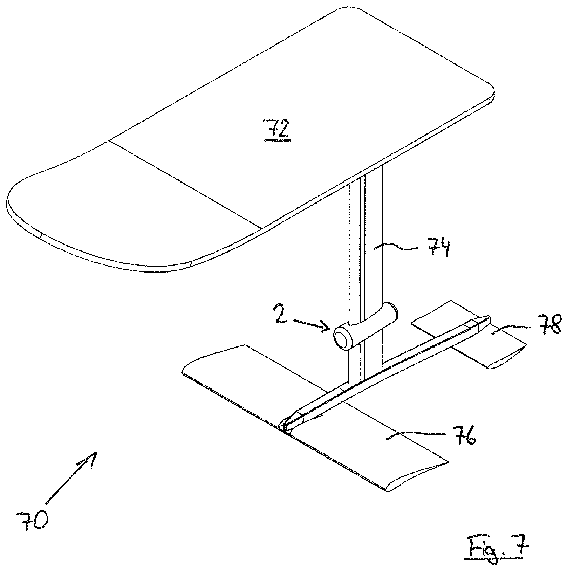

Fig. 7 zeigt ein Wasserfahrzeug 70, das als Foilboard ausgebildet ist. Es weist ein Schwimmbrett 72 auf, das unter anderem mittels einer Strebe 74 mit einer ersten Tragfläche 76 und einer zweiten Tragfläche 78 verbunden ist. An der Strebe 74 eine Antriebsvorrichtung 2 lösbar angeordnet.

## Patentansprüche

1. Antriebsvorrichtung (2) zum Antrieb eines Wasserfahrzeuges, aufweisend einen Stator (4) und einen im Betrieb relativ zum Stator (4) um eine zum Stator (4) ortsfeste Rotationsachse (6) rotierenden und als Innenläufer ausgebildeten Rotor (8), der zumindest im Betrieb mittels zumindest einer ersten Axiallagereinrichtung (10) in axialer Richtung am Stator (4) abgestützt ist, wobei die erste Axiallagereinrichtung (10) zumindest eine am Rotor (8) angeordnete und zur Ausbildung eines Rotormagnetfeldes eingerichtete, erste Rotormagnetvorrichtung (18) und zumindest eine am Stator (4) angeordnete und zur Ausbildung eines ersten Statormagnetfeldes eingerichtete, erste Statormagnetvorrichtung (14) aufweist und zur Ausbildung einer aufgrund des ersten Rotormagnetfeldes und des ersten Statormagnetfeldes zwischen der ersten Rotormagnetvorrichtung (18) und der ersten Statormagnetvorrichtung (14) und zumindest anteilig in die axiale Richtung wirkenden ersten Lagerkraft eingerichtet ist, wobei der Rotor als Innenläufer ausgebildet ist, **dadurch gekennzeichnet, dass** zumindest eine erste hydrodynamische Radiallagereinrichtung (30), mittels der der Rotor (8) im Betrieb in radialer Richtung am Stator (4) abgestützt ist und die zumindest ein am Stator (4) angeordnetes, erstes Statorradiallagerelement (34) und zumindest ein am Rotor (8) angeordnetes, erstes Rotorradiallagerelement (38) aufweist, zwischen denen zumindest im Betrieb ein erster Radialzwischenraum (36) ausgebildet ist, der in Fluidkommunikation mit einem/dem den Stator (4) umgebenden Umgebungsraum und insbesondere dem ersten Axialzwischenraum (16) steht.

2. Antriebsvorrichtung nach Anspruch 1, **dadurch gekennzeichnet, dass** die erste Axiallagereinrichtung (10) derart zur Ausbildung der ersten Lagerkraft eingerichtet ist, dass die erste Rotormagnetvorrichtung (18) zumindest im Betrieb durch die erste Lagerkraft von der ersten Statormagnetvorrichtung (14) abgestoßen wird.

3. Antriebsvorrichtung nach Anspruch 1 oder 2, **dadurch gekennzeichnet, dass** die erste Rotormagnetvorrichtung (18) und/oder die erste Statormagnetvorrichtung (14) zumindest im Betrieb zumindest anteilig, insbesondere ausschließlich, in die axiale Richtung magnetisiert sind/ist.

4. Antriebsvorrichtung nach einem der vorhergehenden Ansprüche, **dadurch gekennzeichnet, dass** die erste Rotormagnetvorrichtung (18) und/oder die erste Statormagnetvorrichtung (14) von zumindest einem Permanentmagneten (50), insbesondere zwei Permanentmagneten (50), ausgebildet sind/ist.

5. Antriebsvorrichtung nach einem der vorhergehenden Ansprüche, **dadurch gekennzeichnet, dass** die erste Rotormagnetvorrichtung (18) und die erste Statormagnetvorrichtung (14) zumindest im Betrieb zumindest im Wesentlichen gleich weit von der Rotationsachse (6) beabstandet sind und insbesondere die erste Statormagnetvorrichtung (14) und/oder die erste Rotormagnetvorrichtung (18) bevorzugt ringförmig um die Rotationsachse (6) umlaufend ausgebildet sind/ist.

6. Antriebsvorrichtung nach einem der vorhergehenden Ansprüche, **dadurch gekennzeichnet, dass** die erste Axiallagereinrichtung (10) ein Anschlagelement (12) aufweist, mit dem eine axiale Verschieblichkeit des Rotors (8) relativ zum Stator (4) und entgegen der ersten Lagerkraft derart begrenzt ist, dass ein Kontakt zwischen der ersten Rotormagnetvorrichtung (18) und der ersten Statormagnetvorrichtung (14) verhindert ist.

7. Antriebsvorrichtung nach einem der vorhergehenden Ansprüche, **dadurch gekennzeichnet, dass** ein erster Axialzwischenraum (16) zwischen der ersten Statormagnetvorrichtung (14) und der ersten Rotormagnetvorrichtung (18) in Fluidkommunikation mit einem den Stator (4) zumindest teilweise umgebenden Umgebungsraum steht.

8. Antriebsvorrichtung nach einem der vorhergehenden Ansprüche, **gekennzeichnet durch** zumindest eine zweite Axiallagereinrichtung (20), mittels der der Rotor (8) zumindest im Betrieb in die axiale Richtung am Stator (4) abgestützt ist und die zumindest eine am Rotor (8) angeordnete und zur Ausbildung eines zweiten Rotormagnetfeldes eingerichtete, zweite Rotormagnetvorrichtung (28) und zumindest eine am Stator (4) angeordnete und zur Ausbildung eines zweiten Statormagnetfeldes eingerichtete, zweite Statormagnetvorrichtung (24) aufweist und zur Ausbildung einer aufgrund des zweiten Rotormagnetfeldes und des zweiten Statormagnetfeldes zwischen der zweiten Rotormagnetvorrichtung und der zweiten Statormagnetvorrichtung und zumindest anteilig in die axiale Richtung wirkenden und zumindest anteilig der ersten Lagerkraft entgegenwirkenden zweiten Lagerkraft eingerichtet ist.

9. Antriebsvorrichtung nach Anspruch 8, **dadurch gekennzeichnet, dass** ein Elektromotor (52) zumindest in die axiale Richtung zumindest teilweise zwischen der ersten Axiallagereinrichtung (10) und der zweiten Axiallagereinrichtung (20) angeordnet ist.

10. Antriebsvorrichtung nach Anspruch 8 oder 9, **dadurch gekennzeichnet, dass** die von der ersten Axiallagereinrichtung (10) bei einem Referenzabstand zwischen der ersten Rotormagnetvorrichtung (18) und der ersten Statormagnetvorrichtung (14) ausgebildete oder maximal auszubildende erste Lagerkraft die von der zweiten Axiallagereinrichtung (20) bei dem Referenzabstand zwischen der zweiten Rotormagnetvorrichtung (28) und der zweiten Statormagnetvorrichtung (24) ausgebildete oder maximal auszubildende zweite Lagerkraft übersteigt.

11. Antriebsvorrichtung nach einem der Ansprüche 8 bis 10, **dadurch gekennzeichnet, dass** die zweite Rotormagnetvorrichtung (28) und/oder die zweite Statormagnetvorrichtung (24) von genau einem Permanentmagneten (50) ausgebildet sind/ist, wobei die erste Rotormagnetvorrichtung (18) und/oder die erste Statormagnetvorrichtung (14) insbesondere von zwei Permanentmagneten (50) ausgebildet sind/ist, wobei die Permanentmagneten (50) bevorzugt gleich ausgebildet sind.

12. Antriebsvorrichtung nach einem der vorherigen Ansprüche, **dadurch gekennzeichnet, dass** der erste Radialzwischenraum (36) zumindest bei einer zentralen Anordnung des Rotors (8) bezogen auf die Rotationsachse 6 eine radiale Erstreckung von zumindest 0,3 mm, bevorzugt von zumindest 0,5 mm und/oder von höchstens 1,2 mm, bevorzugt von höchstens 0,9 mm hat.

13. Antriebsvorrichtung nach einem der vorherigen Ansprüche, **dadurch gekennzeichnet, dass** die erste Radiallagereinrichtung (30), insbesondere in einem zur Rotationsachse rechtwinkligen Querschnitt, zumindest teilweise zwischen der ersten oder zweiten Axiallagereinrichtung (10,20) und der Rotationsachse (6) angeordnet ist.

14. Antriebsvorrichtung nach einem der vorherigen Ansprüche, **gekennzeichnet durch** zumindest eine zweite hydrodynamische Radiallagereinrichtung (40), mittels der der Rotor (8) im Betrieb in die radiale Richtung am Stator (4) abgestützt ist und die ein am Stator (4) angeordnetes, zweites Statorradiallagerelement (44) und ein am Rotor (8) angeordnetes, zweites Rotorradiallagerelement (48) aufweist, zwischen denen zumindest im Betrieb ein zweiter Radialzwischenraum (46) ausgebildet ist, der in Fluidkommunikation mit einem/dem den Stator (4) umgebenden Umgebungsraum und insbesondere mittels eines zwischen dem Stator (4) und dem Rotor (8) ausgebildeten Fluidkanals (54) in Fluidkommunikation mit dem ersten Radialzwischenraum (36) steht, wobei insbesondere der Elektromotor (52) zumindest in axiale Richtung zumindest teilweise zwischen der ersten Radiallagereinrichtung (30) und der zweiten Radiallagereinrichtung (40) angeordnet ist.

## Claims

1. A drive device (2) for driving a watercraft, having a stator (4) and having a rotor (8) which, during operation, rotates relative to the stator (4) about an axis of rotation (6) that is fixed in position in relation to the stator (4), and which is realized as an internal rotor and which, at least during operation, is supported on the stator (4) in the axial direction by means of a first axial bearing means (10), wherein the first axial bearing means (10) has at least one first rotor magnet device (18) arranged on the rotor (8) and configured to realize a first rotor magnetic field, and has at least one first stator magnet device (14) arranged on the stator (4) and configured to realize a first stator magnetic field, and is configured to realize a first bearing force that, owing to the first rotor magnetic field and the first stator magnetic field, acts between the first rotor magnet device (18) and the first stator magnet device (14) and at least to some extent in the axial direction, wherein the rotor is realized as an internal rotor, **characterized by** at least one first hydrodynamic radial bearing means (30), by means of which, during operation, the rotor (8) is supported on the stator (4) in the radial direction and which has at least one first stator radial bearing element (34) arranged on the stator (4) and has at least one first rotor radial bearing element (38) arranged on the rotor (8), between which there is realized, at least during operation, a first radial interspace (36) that is in fluid communication with a/the ambient space surrounding the stator (4) and in particular with the first axial interspace (16).

2. The drive device as claimed in claim 1, **characterized in that** the first axial bearing means (10) is configured to realize the first bearing force in such a way that the first rotor magnet device (18), at least during operation, is repelled from the first stator magnet device (14) by the first bearing force.

3. The drive device as claimed in claim 1 or 2, **characterized in that** the first rotor magnet device (18) and/or the first stator magnet device (14), at least during operation, are/is magnetized in the axial direction, at least to some extent, in particular exclusively.

4. The drive device as claimed in any one of the preceding claims, **characterized in that** the first rotor magnet device (18) and/or the first stator magnet device (14) are/is realized by at least one permanent magnet (50), in particular two permanent magnets (50).

5. The drive device as claimed in any one of the preceding claims, **characterized in that** the first rotor magnet device (18) and the first stator magnet device (14), at least during operation, are spaced at least substantially equidistant from the axis of rotation (6), and in particular the first stator magnet device (14) and/or the first rotor magnet device (18) are/is realized circumferentially around the axis of rotation (6), preferably in the form of a ring.

6. The drive device as claimed in any one of the preceding claims, **characterized in that** the first axial bearing means (10) has a stop element (12) by which a capability of the rotor (8) to shift axially relative to the stator (4) and against the first bearing force is delimited in such a way that contact between the first rotor magnet device (18) and the first stator magnet device (14) is prevented.

7. The drive device as claimed in any one of the preceding claims, **characterized in that** a first axial interspace (16) between the first stator magnet device (14) and the first rotor magnet device (18) is in fluid communication with an ambient space that at least partially surrounds the stator (4).

8. The drive device as claimed in any one of the preceding claims, **characterized by** at least one second axial bearing means (20), by means of which the rotor (8), at least during operation, is supported on the stator (4) in the axial direction, and which has at least one second rotor magnet device (28) arranged on the rotor (8) and configured to realize a second rotor magnetic field, and at least one second stator magnet device (24) arranged on the stator (4) and configured to realize a second stator magnetic field, and which is configured to realize a second bearing force that, owing to the second rotor magnetic field and the second stator magnetic field, acts between the second rotor magnet device and the second stator magnet device, and that acts at least to some extent in the axial direction and at least to some extents acts against the first bearing force.

9. The drive device as claimed in claim 8, **characterized in that** an electric motor (52) is arranged at least in the axial direction at least partially between the first axial bearing means (10) and the second axial bearing means (20).

10. The drive device as claimed in claim 8 or 9, **characterized in that** the first bearing force realized or to be realized as a maximum by the first axial bearing means (10) in the case of a reference distance between the first rotor magnet device (18) and the first stator magnet device (14) exceeds the second bearing force realized or to be realized as a maximum by the second axial bearing means (20) in the case of the reference distance between the second rotor magnet device (28) and the second stator magnet device (24).

11. The drive device as claimed in any one of claims 8 to 10, **characterized in that** the second rotor magnet device (28) and/or the second stator magnet device (24) are/is realized by exactly one permanent magnet (50), wherein the first rotor magnet device (18) and/or the first stator magnet device (14) are/is realized in particular by two permanent magnets (50), wherein the permanent magnets (50) are preferably of the same design.

12. The drive device as claimed in any one of the preceding claims, **characterized in that**, at least when the rotor (8) is arranged centrally, the first radial interspace (36) has, with respect to the axis of rotation (6), a radial extent of at least 0.3 mm, preferably at least 0.5 mm and/or at most 1.2 mm, preferably at most 0.9 mm.

13. The drive device as claimed in any one of the preceding claims, **characterized in that** the first radial bearing means (30), in particular in a cross-section perpendicular to the axis of rotation, is arranged at least partially between the first or the second axial bearing means (10, 20) and the axis of rotation (6).

14. The drive device as claimed in any one of the preceding claims, **characterized by** at least one second hydrodynamic radial bearing means (40), by means of which the rotor (8), during operation, is supported on the stator (4) in the radial direction, and which has a second stator radial bearing element (44) arranged on the stator (4) and a second rotor radial bearing element (48) arranged on the rotor (8), realized between which, at least during operation, there is a second radial interspace (46), which is in fluid communication with a/the ambient space surrounding the stator (4) and in particular is in fluid communication with the first radial interspace (36) by means of a fluid channel (54) realized between the stator (4) and the rotor (8), wherein in particular the electric motor (52) is arranged at least partially between the first radial bearing means (30) and the second radial bearing means (40), at least in the axial direction.

## Revendications

1. Dispositif de propulsion (2) pour la propulsion d'un bateau, présentant un stator (4) et un rotor (8) tournant, lors du fonctionnement, par rapport au stator (4), autour d'un axe de rotation (6) fixe par rapport au stator (4) et réalisé comme un rotor interne, lequel rotor est supporté, au moins lors du fonctionnement, au moyen d'au moins un premier système de palier axial (10), dans la direction axiale, au niveau du stator (4), le premier système de palier axial (10) présentant au moins un premier dispositif magnétique (18) de rotor, agencé au niveau du rotor (8) et conçu pour la réalisation d'un premier champ magnétique de rotor, et au moins un premier dispositif magnétique (14) de stator, agencé au niveau du stator (4) et conçu pour la réalisation d'un premier champ magnétique de stator, et conçu pour la réalisation d'une première force d'appui agissant, en raison du premier champ magnétique de rotor et du premier champ magnétique de stator, entre le premier dispositif magnétique (18) de rotor et le premier dispositif magnétique (14) de stator et au moins en partie dans la direction axiale, le rotor étant réalisé comme un rotor interne, **caractérisé en ce qu'**au moins un premier système de palier radial (30) hydrodynamique, au moyen duquel le rotor (8) est supporté lors du fonctionnement dans la direction radiale au niveau du stator (4) et qui présente au moins un premier élément de palier radial (34) de stator agencé au niveau du stator (4) et au moins un premier élément de palier radial (38) de rotor, agencé au niveau du rotor (8), entre lesquels est réalisé, au moins lors du fonctionnement, un premier espace intermédiaire radial (36), qui est en communication fluidique avec un espace environnant/l'espace environnant entourant le stator (4) et en particulier avec le premier espace intermédiaire axial (16).

2. Dispositif de propulsion selon la revendication 1, **caractérisé en ce que** le premier système de palier axial (10) est conçu pour la réalisation de la première force d'appui de telle sorte que le premier dispositif magnétique (18) de rotor est repoussé par rapport au premier dispositif magnétique (14) de stator, au moins lors du fonctionnement, par la premier force d'appui.

3. Dispositif de propulsion selon la revendication 1 ou 2, **caractérisé en ce que** le premier dispositif magnétique (18) de rotor et/ou le premier dispositif magnétique (14) de stator, au moins pendant le fonctionnement, est/sont magnétisé(s), au moins en partie, en particulier exclusivement, dans la direction axiale.

4. Dispositif de propulsion selon l'une des revendications précédentes, **caractérisé en ce que** le premier dispositif magnétique (18) de rotor et/ou le premier dispositif magnétique (14) de stator est/sont réalisé(s) par au moins un aimant permanent (50), en particulier par au moins deux aimants permanents (50).

5. Dispositif de propulsion selon l'une des revendications précédentes, **caractérisé en ce que** le premier dispositif magnétique (18) de rotor et le premier dispositif magnétique (14) de stator sont écartés, au moins lors du fonctionnement, au moins de manière sensiblement identique de l'axe de rotation (6) et en particulier le premier dispositif magnétique (14) de stator et/ou le premier dispositif magnétique (18) de rotor est/sont réalisé(s) de préférence de manière à entourer sous forme annulaire l'axe de rotation (6).

6. Dispositif de propulsion selon l'une des revendications précédentes, **caractérisé en ce que** le premier système de palier axial (10) présente un élément de butée (12) qui limite un coulissement axial du rotor (8) par rapport au stator (4) et contre la première force d'appui de telle sorte qu'un contact entre le premier dispositif magnétique (18) de stator et le premier dispositif magnétique (14) de stator est empêché.

7. Dispositif de propulsion selon l'une des revendications précédentes, **caractérisé en ce que** le premier espace intermédiaire axial (16) entre le premier dispositif magnétique (14) de stator et le premier dispositif magnétique (18) de rotor est en communication fluidique avec un espace environnant entourant au moins partiellement le stator (4).

8. Dispositif de propulsion selon l'une des revendications précédentes, **caractérisé par** au moins un second système de palier axial (20), au moyen duquel le rotor (8) est supporté, au moins lors du fonctionnement, dans la direction radiale au niveau du stator (4) et qui présente au moins un second dispositif magnétique (28) de rotor agencé au niveau du rotor (8) et conçu pour la réalisation d'un second champ magnétique de rotor et au moins un second dispositif magnétique (24) de stator agencé au niveau du stator (4) et conçu pour la réalisation d'un second champ magnétique de stator et conçu pour la réalisation d'une seconde force d'appui agissant, en raison du second champ magnétique de rotor et du second champ magnétique de stator, entre le second dispositif magnétique de rotor et le second dispositif magnétique de stator et au moins en partie dans la direction axiale et s'opposant au moins en partie à la première force d'appui.

9. Dispositif de propulsion selon la revendication 8, **caractérisé en ce qu'**un moteur électrique (52) est agencé, au moins dans la direction axiale, au moins partiellement, entre le premier système de palier axial (10) et le second système de palier axial (20).

10. Dispositif de propulsion selon la revendication 8 ou 9, **caractérisé en ce que** la première force d'appui réalisée ou maximale à réaliser par le premier système de palier axial (10), à une distance de référence, entre le premier dispositif magnétique (18) de rotor et le premier dispositif magnétique (14) de stator est supérieure à la seconde force d'appui réalisée ou maximale à réaliser par le second système de palier axial (20), à la distance de référence, entre le second dispositif magnétique (28) de rotor et le second dispositif magnétique (24) de stator.

11. Dispositif de propulsion selon l'une des revendications 8 à 10, **caractérisé en ce que** le second dispositif magnétique (28) de rotor et/ou le second dispositif magnétique (24) de stator est/sont réalisé(s) par exactement un aimant permanent (50), le premier dispositif magnétique (18) de rotor et/ou le premier dispositif magnétique (14) de stator étant en particulier réalisé(s) par deux aimants permanents (50), les aimants permanents (50) étant de préférence réalisés de manière identique.

12. Dispositif de propulsion selon l'une des revendications précédentes, **caractérisé en ce que** le premier espace intermédiaire radial (36) présente une étendue radiale, au moins lors d'un agencement central du rotor (8), par rapport à l'axe de rotation (6), d'au moins 0,3 mm, de préférence d'au moins 0,5 mm et/ou d'au plus 1,2 mm, de préférence d'au plus 0,9 mm.

13. Dispositif de propulsion selon l'une des revendications précédentes, **caractérisé en ce que** le premier système de palier radial (30), en particulier dans une section transversale perpendiculaire à l'axe de rotation, est agencé au moins partiellement entre le premier ou le second système de palier axial (10, 20) et l'axe de rotation (6).

14. Dispositif de propulsion selon l'une des revendications précédentes, **caractérisé par** au moins un second système de palier radial (40) hydrodynamique, au moyen duquel le rotor (8) est supporté, lors du fonctionnement, dans la direction radiale au niveau du stator (4) et qui présente un second élément de palier radial (44) de stator agencé au niveau du stator (4) et un second élément de palier radial (48) de rotor agencé au niveau du rotor (8), entre lesquels est réalisé, au moins lors du fonctionnement, un second espace intermédiaire radial (46) qui est en communication fluidique avec un espace environnant/l'espace environnant entourant le stator (4) et en particulier en communication fluidique avec le premier espace intermédiaire radial (36) au moyen d'un canal fluidique (54) réalisé entre le stator (4) et le rotor (8), le moteur électrique (52) étant en particulier agencé, au moins dans la direction axiale, au moins partiellement entre le premier système de palier radial (30) et le second système de palier radial (40).
